# EUROPEAN PATENT APPLICATION

(11) **EP 1 870 830 A1**
(43) Date of publication of application: **26.12.2007**
(21) Application number: 06121085.2
(22) Date of filing: 22.09.2006
(51) Int. Cl.: G06F 21/00

(54) **System and method for detecting hidden process using system event information**

(30) Priority: 21.06.2006 KR 20060055951
(71) Applicant: ELECTRONICS AND TELECOMMUNICATIONS RESEARCH INSTITUTE, Daejon 305-350 (KR)
(72) Inventor: Kim, Eun Young, Daejeon (KR); Yun, Youngtae, Daejeon (KR); Park, Eungki, Daejeon (KR)
(74) Representative: Betten & Resch

(57) **Abstract**

A system and method for detecting a hidden process using system event information are provided. The system includes: a kernel layer monitoring module for extracting system event information by monitoring a kernel layer system; a kernel layer process list detecting module for detecting processes related to an event from the extracted system event information; an application layer process list detecting module for detecting a process list provided to a user from an application layer; and a hidden process detecting module for detecting a process that is present only in the kernel layer as a hidden process by comparing the processes detected from the kernel layer process list detecting module and the processes detected from the application layer process list detecting module.

## Description

### BACKGROUND OF THE INVENTION

### Field of the Invention

The present invention relates to a system and method for detecting a hidden process, and more particularly, to a system and method for detecting a hidden process using system event information by extracting a process list provide from a kernel layer using system event information that is generated through monitoring a system kernel layer in real-time and comparing the process list provided from the kernel layer with a process list provided from an application layer for protecting a user system from the hidden process in real-time so as to obtain system security.

### Description of the Related Art

Since both of a hidden process and a normal process are executed inside a system, the hidden process may be a same type of process compared to the normal process. However, a user is unable to recognize the presence of the hidden processes through a task manager that is a process information program because a malicious code such as a rootkit hides the information on the hidden processes from the application layer of the system in order to hide the hidden processes from the user.

As described above, the hidden process does not provide any related information to the application layer. However, the hidden process opens its information at the system kernel layer because the hidden process needs to use system resources through resource allocation at the kernel layer to execute the related processes of the hidden process.

Therefore, the hidden processes may be detected by detecting processes accessing a system resource by using system event information which is provide when a system resource is accessed in real-time and comparing the detected processes with processes shown in the application layer.

As a conventional method for detecting hidden processes, a hidden process detecting scheme using ActiveProcessLinks included in an EPROCESS structure was introduced. The hidden process detecting scheme was opened to public by Joanna Rutkowska at http://invisiblethings.org. The hidden process detecting scheme detects the hidden process as follows. A corresponding process list (a) is extracted from the application layer of a system. Another process list (b) is extracted from the kernel layer through the ActiveProcessLinks of the EPROCESS structure. After obtaining the application layer process list (a) and the kernel layer process list (b), they are compared and find processes that are present in the kernel only. Herein, the processes that are present in the kernel only are determined as the hidden processes. The conventional hidden process detecting scheme using the EPROCESS structure has disadvantages as follows. The conventional hidden process detecting scheme using the EPROCESS structure may determine normal processes as hidden processes due to the time delay for obtaining the lists. Also, the conventional hidden process detecting scheme using the EPROCESS structure cannot detect the hidden process if the structure of Windows operating system is modified because the process list is obtained through the ActiveProcessLinks of the EPROCESS structure, and the EPROCESS structure is not an internal system structure produced by the Microsoft Corporation which produces Windows operating systems.

The ActiveProcessLinks of the EPROCESS structure is included in a corresponding process list and is executed when system resources are allocated to a corresponding process in a system. Accordingly, when the resource allocation is not requested, that is, when the process is in a periodic idle state, the ActiveProcessLinks of the EPROCESS structure is not included in the corresponding process list. Therefore, the conventional hidden process detecting scheme using the EPROCESS structure cannot detect the hidden process that is in the idle state in the system.

As a conventional product for detecting a hidden process, a beta version of BlackLight was introduced by F-Secure Corporation (http://www.f-secure.com/blacklight). The beta version of BlackLight uses a function OpenProcess () that is used to request information of currently running processes in Windows system. That is, the BlackLight applies all of PID values that can be generated in the Window system into a corresponding function as an input parameter. Then, the BlackLight determines whether a corresponding process of the applied PID value is present or not according to the value returned from the corresponding function If corresponding PID process list information is not in the application layer, the corresponding PID process is determined as a hidden process. As described above, the beta version of BlackLight detects the hidden process through API, which is used in the application layer of the system, without performing any operations in a system kernel layer. However, the BlackLight cannot detect a hidden process if the hidden process returns a maliciously-made up result when the function OpenProcess () with own PID value is called. In this case, the BlackLight determines that the corresponding process is not present in the system. Also, the hidden process detecting scheme using the function OpenProcess () is not a real-time detecting scheme. It is the hidden process detecting scheme using a scanning method. Therefore, the hidden process detecting scheme using the function OpenProcess () cannot detect the hidden process when the hidden process is activated or already terminated.

### SUMMARY OF THE INVENTION

Accordingly, the present invention is directed to a system and method for detecting a hidden process using system event information, which substantially obviates one or more problems due to limitations and disadvantages of the related art.

It is an object of the present invention to provide to a system and method for detecting a hidden process using system event information by extracting a process list provide from a kernel layer using system event information generated through monitoring a system kernel layer in real-time and comparing the kernel layer process list with an application layer process list provided from an application layer and removing the detected hidden processes.

It is another object of the present invention to provide a system and method for detecting a hidden process using system event information although the hidden process is in the idle state by comparing a application layer process list and a kernel layer process list based on files, registries and network event information, which are generated in the system in real-time in order to overcome the limitation of the conventional hidden process detecting method using the ActiveProcess.Links.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a system for detecting a hidden process using system event information, including: a kernel layer monitoring module for extracting system event information by monitoring a kernel layer system, a kernel layer process list detecting module for detecting processes related to an event from the extracted system event information; an application layer process list detecting module for detecting a process list provided to a user from an application layer; and a hidden process detecting module for detecting a process that is present only in the kernel layer as a hidden process by comparing the processes detected from the kernel layer process list detecting module and the processes detected from the application layer process list detecting module

The kernel layer monitoring module may include: a file monitoring module for extracting file event information by monitoring a file system at the kernel layer; a registry monitoring module for extracting registry event information by monitoring registries accessed at the kernel layer; and a network monitoring module for extracting network event information by monitoring a network at the kernel layer.

In another aspect of the present invention, there is provided a method for detecting a hidden process using system event information including the steps of: a) extracting system event information by monitoring a kernel layer system, b) detecting processes related to an event from the extracted system event information; c) detecting a process list provided from an application layer to a user; and d) detecting a process that is present only in the kernel layer as a hidden process by comparing the processed detected from the step b) with the processed in the process list detected from the step c).

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention, are incorporated in and constitute a part of this application, illustrate embodiments of the invention and together with the description serve to explain the principle of the invention. In the drawings:

FIG. 1 is a block diagram illustrating a system for detecting a hidden process using system event information according to an embodiment of the present invention; and

FIG. 2 is a flowchart showing a method for detecting a hidden process using system event information according to an embodiment of the present invention.

### DETAILED DESCRIPTION OF THE INVENTION

Reference will now be made in detail to the preferred embodiments of the present invention, examples of which are illustrated in the accompanying drawings.

Hereinafter, a system and method for detecting a hidden process using system event information according to an embodiment of the present invention.

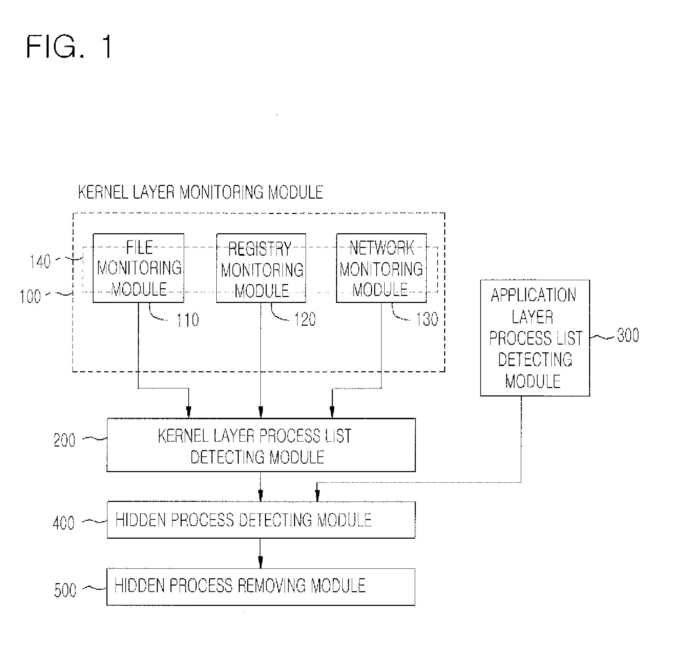

FIG. 1 is a block diagram illustrating a system for detecting a hidden process using system event information according to an embodiment of the present invention.

Referring to FIG. 1, the system for detecting a hidden process using the system event information according to the present embodiment includes a kernel layer monitoring module 100, a kernel layer process list detecting module 200, an application layer process list detecting module 300, a hidden process detecting module 400, and a hidden process removing module 500. The kernel layer monitoring module 100 extracts system event information by monitoring a kernel layer system. The kernel layer process list detecting module 200 detects processes related to the events from the extracted system event information. The application layer process list detecting module 300 detects a process list which is provided to a user from an application layer. The hidden process detecting module 400 comparing the processes detected from the kernel layer process list detecting module 200 with the processes detected from the application layer process list detecting module 300, and determining the processes in the kernel layer only as the hidden process The hidden process removing module 500 removes hidden processes detected at the hidden process detecting module 400

The kernel layer monitoring module 100 includes a file monitoring module 110, a registry monitoring module 120 and a network monitoring module 130 in order to monitor system event information provided from a kernel layer. The file monitoring module 110 monitors a file system at a kernel layer. The registry monitoring module 120 monitors registries accessed at the kernel layer, and the network monitoring module 130 monitors a network in real-time.

Since system information is allocated to execute a process in a kernel layer, information related to a hidden process is shown in the kernel layer.

The file monitoring module 110 is a module finding file system event information by monitoring a file system at a kernel layer in real-time. The file monitoring module 110 monitors file system event information such as which processes access a predetermined file, which file is accessed by a predetermined process, and what kind of event makes a process to access a file. The file system event information outputted from the file monitoring module 110 are the name of a process accessing a predetermined file, a time for accessing a predetermined file, a file request event such as Query information, Open or Close, a path for accessing a predetermined file and a result of accessing a predetermined file such as success or fail to access the file. The file system event information outputted from the file monitoring module 110 is provided to the kernel layer process list detecting module 200.

The registry monitoring module 120 is a module that monitors registries accessed at a kernel layer in real-time. The registry monitoring module 120 detects which process requests predetermined registry event information and which registry event information is requested by a predetermined process. The registry even information outputted from the registry monitoring module 120 are the name of a process accessing a predetermined registry, a time for accessing a predetermined registry, a registry request even such as Openkey and CloseKey, a patch for accessing a registry, and a result of accessing a registry such as success or fail to access the registry The registry monitoring module 120 provides the registry even information to the kernel layer process list detecting module 200.

The network monitoring module 130 detects network event information by monitoring a network in real-time. The network monitoring module 130 monitors information in real-time, such as which process receives or transmits a predetermined packet, what packet is transmitted or received, and which port is used to transmit and receive a predetermined packet. The network event information outputted from the network monitoring module 130 is the name of a process accessing a network, a time for generating a network packet, a transmitter address, a receiver address, a transmitter port, a receiver port, the length of a packet, a checksum, a TTL value and fragmentation information. The network monitoring module 130 provides the network event information to the kernel layer process list detecting module 200.

The kernel layer monitoring module 100 may include a system event information filtering module 140 for monitoring the system event information of a system kernel layer.

The system event information filtering module 140 excludes a predetermined event and a predetermined process from objects of monitoring system event information at a kernel layer. That is, the system event information filter module 140 reduces the objects of monitoring the system event information in order to increase the performance of the hidden process detecting system.

The kernel layer process list detecting module 200 extracts a list of processes accessing an event from the system event information provided from the kernel layer monitoring module 100. The system event information includes file event information obtained by the file monitoring module 110, registry event information obtained by the registry monitoring module 120 and network event information obtained by the network monitoring module 130. The process list extracted from the kernel layer process list detecting module 200 may include a file access process, a registry access process and a network access process.

The application layer process list detecting module 300 detects process list information provided to a user from an application layer. Generally, the standard of the process list information is process information that is provided to a user from an application layer through Win32 API In case of Windows system, the process list information is process list information provided through a task manager.

The kernel layer process list, which is detected from the kernel layer process list detecting module 200, and the application layer process list, which is detected from the application layer process list detecting module 300, are transferred to the hidden process detecting module 400.

The hidden process detecting module 400 finds a hidden process by comparing the kernel layer process list and the application layer process list.

The information about the hidden process is not shown at the application layer but it is opened in the kernel layer to receive resources for executing related processes.

Therefore, if a process is present only at the kernel layer and not in the application layer, the process is determined as a hidden process.

However, if the kernel layer process list and the application layer process list are identical, the process executed in the system is determined as a normal process.

The hidden process removing module 500 terminates or removes the hidden process if the hidden process detecting module 400 detects the hidden processes.

The hidden process removing module 400 processes the hidden process according to the user's decision.

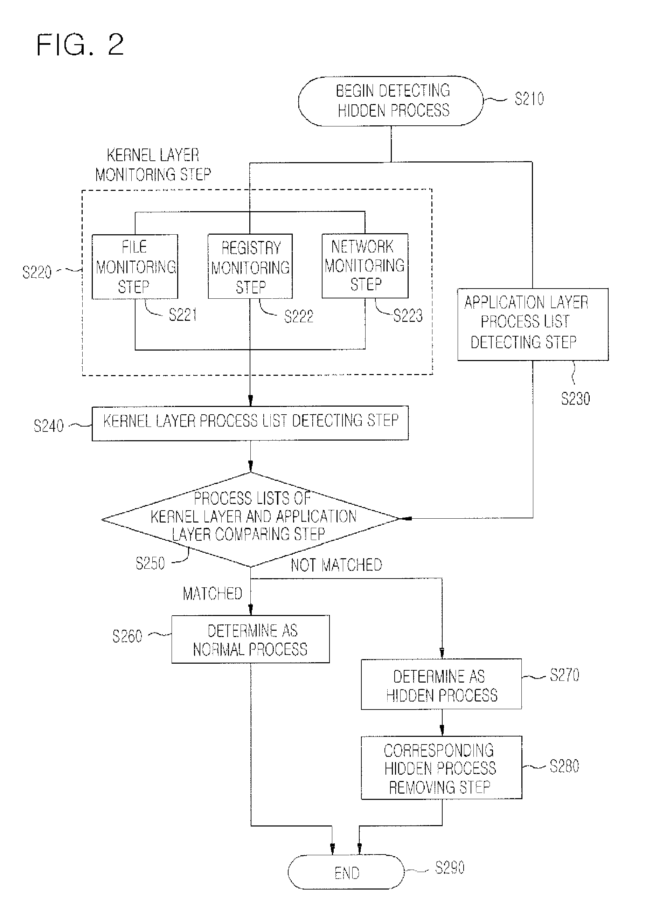

FIG. 2 is a flowchart showing a method for detecting a hidden process using system event information according to an embodiment of the present invention.

Referring to FIG. 2, an operation for detecting a hidden process begins when a user executes a system or a program for detecting a hidden process at step S210.

Although the operation for detecting the hidden process may begin by a begin instruction inputted from the user, it is preferable that the operation for detecting the hidden process is continuously performed while the system is operating in order to detect the hidden process in real-time.

After the operation for detecting the hidden process begins at step S210, an operation for monitoring a kernel layer and an operation for detecting an application layer process list are performed at steps S220 and S230

At the kernel layer monitoring step S220, the system event information is extracted by monitoring the kernel layer of the system.

In the kernel layer monitoring step S220, file event information is extracted by monitoring a file system at step S221, registry event information is extracted by monitoring registries at step S222, and network event information is extracted by monitoring a network at step S223.

The system event information extracted in the kernel layer monitoring step S220 is provided for detecting a kernel layer process list at step S240.

At the kernel layer process list detecting step S240, a kernel layer process list, which is a list of processes accessing an event, is extracted from the system event information. The extracted kernel layer process list is provided for comparing a kernel layer process list and an application layer process list at step S250.

At the application layer process list detecting step S230, information of a process list provided to a user from an application layer is detected and provided for comparing a kernel layer process list and an application layer process list at step S250.

At the process list comparing step S250, it determines whether the kernel layer process list and the application layer process list are identical or not by comparing the kernel layer process list and the application layer process list.

If the kernel layer process list and the application layer process list are identical, the processes are determined as normal processes at step S260.

If the kernel layer process list and the application layer process list are not identical, processes, which are present only in the kernel layer process list but not in the application layer, are determined as hidden processes at step S270.

The determined hidden processes are processed according to the user's decision. If the user wants to delete the detected hidden processes, the hidden processes are removed from the system at step S280.

As described above, the system and method for detecting the hidden process according to the present invention can protect the user's system from the hidden process by detecting the hidden process in real-time using system event information provided from the kernel layer.

Also, the system and method for detecting the hidden process according to the present invention can detect and remove the hidden process using event information generated at the system even if the hidden process is in the idle state. Furthermore, the system and method for detecting the hidden process according to the present invention can detect the hidden process at the moment the hidden process is executed because real-time event information is used to detect the hidden process.

It will be apparent to those skilled in the art that various modifications and variations can be made in the present invention. Thus, it is intended that the present invention covers the modifications and variations of this invention provided they come within the scope of the appended claims and their equivalents.

## Claims

1. A system for detecting a hidden process using system event information is **characterized by** detecting a process that is present only in a kernel layer as a hidden process by comparing a process list extracted from system event information obtained through kernel layer monitoring and a process list provided from an application list to a user.

2. The system of claim 1, wherein the kernel layer monitoring extracts file event information by monitoring a file system at the kernel layer in.

3. The system of claim 1, wherein the kernel layer monitoring extracts registry event information by monitoring registries accessed at the kernel layer.

4. The system of claim 1, wherein the kernel layer monitoring extracts network event information by monitoring a network.

5. The system of anyone of claims 2 to 4, wherein the kernel layer is monitored in real-time.

6. The system of anyone of claims 1 to 4, wherein the kernel layer monitoring further includes a system event information filtering module for not detecting predetermined event information and a predetermined process.

7. A system for detecting a hidden process using system event information, comprising :
a kernel layer monitoring module for extracting system event information by monitoring a kernel layer system;
a kernel layer process list detecting module for detecting processes related to an event from the extracted system event information;
an application layer process list detecting module for detecting a process list provided to a user from an application layer; and
a hidden process detecting module for detecting a process that is present only in the kernel layer as a hidden process by comparing the processes detected from the kernel layer process list detecting module and the processes detected from the application layer process list detecting module.

8. The system of claim 7, wherein the kernel layer monitoring module includes a file monitoring module for extracting file event information by monitoring a file system at the kernel layer.

9. The system of claim 7, wherein the kernel layer monitoring module includes a registry monitoring module for extracting registry event information by monitoring registries accessed at the kernel layer.

10. The system of claim 7, wherein the kernel layer monitoring module includes a network monitoring module for extracting network event information by monitoring a network.

11. The system of claim 7, wherein the kernel layer monitoring module includes:
a file monitoring module for extracting file event information by monitoring a file system at the kernel layer,
a registry monitoring module for extracting registry event information by monitoring registries accessed at the kernel layer; and
a network monitoring module for extracting network event information by monitoring a network at the kernel layer.

12. The system of claim 11, wherein the application layer process list detecting module detects process information provided from the application layer through API.

13. The system of anyone of claims 7 to 12, further comprising a hidden process removing module for removing the hidden process detected from the hidden process detecting module.

14. A method for detecting a hidden process using system event information comprising the steps of:
a) extracting system event information by monitoring a kernel layer system;
b) detecting processes related to an event from the extracted system event information;
c) detecting a process list provided from an application layer to a user; and
d) detecting a process that is present only in the kernel layer as a hidden process by comparing the processed detected from the step b) with the processed in the process list detected from the step c).

15. The method of claim 14, wherein the step a) includes the steps of
a-1) extracting file event information by monitoring a file system in the kernel layer;
a-2) extracting registry event information by monitoring registries accessed at the kernel layer; and
a-3) extracting network event information by monitoring a network at the kernel layer.

16. The method of anyone of claims 14 and 15, further comprising the step of removing the hidden process detected in the step d).
